(19) **Europäisches Patentamt**
**European Patent Office**
**Office européen des brevets**

(11) **EP 3 017 480 B1**

(12) **FASCICULE DE BREVET EUROPEEN**

(45) Date de publication et mention de la délivrance du brevet:
**08.08.2018 Bulletin 2018/32**

(51) Int Cl.:
**H01L 31/04** *(2014.01)*    **H02J 3/38** *(2006.01)*

(21) Numéro de dépôt: **14738454.9**

(22) Date de dépôt: **03.07.2014**

(86) Numéro de dépôt international:
**PCT/EP2014/064254**

(87) Numéro de publication internationale:
**WO 2015/001055 (08.01.2015 Gazette 2015/01)**

(54) **CIRCUIT DE SIMULATION D'UN RÉSEAU ÉLECTRIQUE ALTERNATIF ET SON PROCÉDÉ DE COMMANDE**

SIMULATIONSSCHALTUNG EINES ALTERNIERENDEN ELEKTRISCHEN GITTERS UND STEUERUNGSVERFAHREN DAFÜR

SIMULATION CIRCUIT OF AN ALTERNATING ELECTRIC GRID AND METHOD FOR CONTROLLING SAME

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.07.2013 FR 1356670**

(43) Date de publication de la demande:
**11.05.2016 Bulletin 2016/19**

(73) Titulaire: **Electricité de France**
**75008 Paris (FR)**

(72) Inventeurs:
• **ARAGNOU, Franck**
  **F-77250 Moret sur Loing (FR)**
• **CARDOSO-RODRIGUES, Denis**
  **F-13090 Aix en Provence (FR)**

(74) Mandataire: **Regimbeau**
**Parc d'affaires Cap Nord A**
**2, allée Marie Berhaut**
**CS 71104**
**35011 Rennes Cedex (FR)**

(56) Documents cités:
DE-A1- 19 839 636        DE-A1-102011 008 891
DE-A1-102011 111 192     US-A1- 2011 175 662

• **Tony Sample: "Failure modes and degradation rates from field-aged crystalline silicon modules", , 17 février 2011 (2011-02-17), XP055105933, Extrait de l'Internet: URL:http://www1.eere.energy.gov/solar/pdfs /pvmrw2011_28_csi_sample.pdf [extrait le 2014-03-06]**
• **PETER HACKE ET AL: "Testing and Analysis for Lifetime Prediction of Crystalline Silicon PV Modules Undergoing Degradation by System Voltage Stress", IEEE JOURNAL OF PHOTOVOLTAICS, I E E E, US, vol. 3, no. 1, 1 janvier 2013 (2013-01-01) , pages 246-253, XP011482204, ISSN: 2156-3381, DOI: 10.1109/JPHOTOV.2012.2222351**

**Description**

La présente invention concerne un circuit de simulation d'un réseau électrique alternatif.

Un domaine d'application de l'invention peut être un tel circuit de simulation pour au moins un panneau photovoltaïque ou au moins une centrale photovoltaïque. En particulier, un cas d'application peut être celui où le circuit de simulation doit être connecté au côté alternatif d'un onduleur d'au moins un panneau photovoltaïque.

Le document DE-A-198 39 636 concerne un circuit suivant le préambule de la revendication 1.

Les panneaux solaires photovoltaïques peuvent être le siège d'une dégradation irréversible de performances lorsqu'ils sont exposés à la lumière en circuit ouvert sur une longue période. En particulier, lorsque les panneaux photovoltaïques sont installés sur un site en attente de raccordement à un réseau d'évacuation d'électricité, ils sont exposés à la lumière et sont en circuit ouvert. Ce phénomène pénalise la rentabilité des projets photovoltaïques dont la date de raccordement au réseau d'évacuation d'électricité intervient plusieurs mois après la mise en place des modules photovoltaïques.

Une des solutions connues jusqu'à présent est de positionner sur le circuit à courant continu des panneaux photovoltaïques des résistances de charge fixes directement en sortie des modules solaires. Toutefois, cette solution, dont l'avantage est d'être peu coûteuse, ne permet pas de maîtriser le point de fonctionnement des panneaux photovoltaïques en fonction du rayonnement solaire et ne répond donc pas aux besoins. En effet, les fabricants des panneaux photovoltaïques préconisent de les faire débiter toujours au point de puissance maximale.

Le document US-A-2013/00 63 993 décrit un émulateur de réseau alternatif devant être raccordé à l'onduleur d'un générateur photovoltaïque. Cet émulateur comporte un banc de résistances pouvant être connecté sélectivement par des interrupteurs au côté alternatif de l'onduleur photovoltaïque du générateur photovoltaïque. En outre, une source de courant alternatif est branchée sur le côté alternatif de l'onduleur photovoltaïque et en parallèle avec le banc de résistances. Ce document indique qu'en cas de variations rapides de la puissance à dissiper, la source de courant alternatif dispose d'une marge suffisante pour réguler la résistance équivalente du banc de résistances pour empêcher du courant de retourner à cette source. Cette source de courant alternatif peut être une source programmable selon ce document, cette source étant elle-même raccordée à un réseau électrique d'alimentation.

Par conséquent, le dispositif décrit par ce document possède des limitations quant à l'emploi d'une source de courant alternatif et est compliqué à mettre en oeuvre.

Le document CN-U-2028 18 122 décrit un émulateur de réseau alternatif, comportant un module de conversion AC vers DC, un IGBT, un module de sortie série-parallèle, un circuit de filtrage et un circuit de sortie triphasé.

Ce dispositif présente également l'inconvénient de devoir nécessiter une source de courant alternatif, cette source étant elle-même raccordée à un réseau électrique d'alimentation.

Ainsi, chacun des dispositifs décrit par les deux documents US-A-2013/00 63 993 et CN-U-2028 18 122 nécessite une source de courant alternatif, alors que l'on souhaite justement pouvoir simuler sur le côté alternatif la présence d'un réseau de courant alternatif sans disposer de raccordement à un tel réseau de courant alternatif.

L'invention vise à obtenir un circuit de simulation d'un réseau électrique alternatif, ainsi qu'un procédé de commande de ce circuit, qui pallient les inconvénients de l'état de la technique lorsque le panneau photovoltaïque ou la centrale photovoltaïque ou plus généralement une unité de production d'électricité est en attente de raccordement à un réseau d'évacuation de l'électricité produite par ce panneau ou par cette centrale ou par cette unité de production d'électricité et sans que l'on dispose de réseau électrique d'alimentation.

A cet effet, un premier objet de l'invention est un circuit suivant la revendication 1.

L'invention permet ainsi de réduire fortement le coût du système en se dispensant d'une source de courant alternatif et en combinant des résistances à des composants d'électronique de puissance dont le dimensionnement est réduit par la présence des résistances.

Les revendications 2 à 9 concernent des modes de réalisation du circuit suivant l'invention.

Les revendications 10 et 11 concernent un procédé de commande du circuit suivant l'invention.

L'invention sera mieux comprise à la lecture de la description qui va suivre, donnée uniquement à titre d'exemple non limitatif en référence aux dessins annexés, sur lesquels :

- la figure 1 représente un schéma électrique du circuit de simulation suivant un mode de réalisation de l'invention,
- la figure 2 représente un schéma électrique d'une partie du circuit de simulation suivant la figure 1,
- la figure 3 représente un organigramme du procédé de commande du circuit de simulation suivant un mode de réalisation de l'invention,
- la figure 4A représente un chronogramme représentant un exemple de la manière dont la puissance du banc de résistances suit la puissance active imposée au circuit de simulation suivant un mode de réalisation de l'invention,
- la figure 4B représente un chronogramme de la puissance active du deuxième onduleur du circuit de simulation en correspondance avec la figure 4A,
- la figure 5 représente un schéma électrique du circuit de simulation suivant un mode de réalisation de l'invention.

Le circuit 1 de simulation d'un réseau électrique alternatif comporte au moins un port 2 de courant alternatif et un banc 3 de premières résistances 31, 32, 33, ..., 3n. Les premières résistances 31, 32, 33, ..., 3n sont aptes à être connectées de manière sélective au port 2 par l'intermédiaire de moyens 4 de connexion. Dans un mode de réalisation, le circuit 1 simule la présence d'un réseau électrique alternatif sur le port alternatif 2.

Ce port 2 de courant alternatif, également appelé port alternatif 2, est destiné à être connecté à un moins une unité PV de production d'électricité, par exemple à un premier côté alternatif 100 d'au moins une unité PV de production d'électricité. Cette unité PV de production d'électricité peut comporter un organe OPV de production de courant alternatif sur le premier côté alternatif 100. Cet organe OPV de production de courant alternatif peut être un onduleur OPV devant fournir du courant électrique alternatif par ce premier côté alternatif 100.

Cette unité PV de production d'électricité peut être photovoltaïque. Cette unité PV de production d'électricité peut être au moins un panneau photovoltaïque ou une centrale photovoltaïque. Par exemple, le port alternatif 2 est destiné à être connecté au premier côté alternatif 100 d'au moins un premier onduleur OPV d'au moins un panneau photovoltaïque PV (ou de plusieurs panneaux photovoltaïques PV) ou d'une centrale photovoltaïque PV (ou de plusieurs centrales photovoltaïques PV), devant fournir du courant électrique alternatif par ce côté alternatif 100.

L'unité PV de production d'électricité peut être autre que photovoltaïque.

Par exemple, l'unité PV de production d'électricité peut être ou comprendre au moins une éolienne (PV) de production d'électricité. Dans ce cas, le port 2 de courant alternatif est destiné à être connecté au moins une éolienne PV de production d'électricité, par exemple au premier côté alternatif 100 d'un alternateur OPV, devant fournir du courant alternatif par ce premier côté alternatif 100. Par exemple, le port 2 de courant alternatif est destiné à être connecté à au moins une éolienne PV offshore de production d'électricité. Dans un autre exemple, le port 2 de courant alternatif est destiné à être connecté à au moins une éolienne PV terrestre de production d'électricité.

L'invention est décrite ci-dessous dans le cas d'une unité PV de production d'électricité photovoltaïque. Bien entendu, ce qui est décrit ci-dessous est applicable aux autres cas mentionnés ci-dessus, la référence PV, OPV pouvant être remplacée par toute unité PV de production d'électricité.

Le circuit 1 de simulation comporte par exemple une entrée 20 connectée au port 2 de courant alternatif, cette entrée 20 servant à la connexion au côté alternatif 100 de l'onduleur photovoltaïque OPV. Le premier onduleur OPV doit fournir du courant électrique alternatif par ce côté alternatif 100. Par exemple, chaque première résistance 31, 32, 33, ..., 3n au port 2 alternatif est apte à être branchée en parallèle sur le port alternatif 2 (par exemple entre le port alternatif 2 et la masse GND) par l'intermédiaire des moyens 4 de connexion.

Le côté alternatif 100 peut également être connecté à un ou plusieurs dispositifs APV auxiliaires devant consommer une partie de l'énergie fournie par l'onduleur OPV au côté alternatif 100. Ce ou ces dispositifs auxiliaires APV peuvent comprendre par exemple un ou plusieurs transformateurs de service auxiliaires, qui doivent alimenter à partir de l'énergie fournie par l'onduleur OPV sur le côté alternatif 100 une partie de contrôle (non représentée) de l'onduleur OPV ou un dispositif de protection électrique de l'onduleur OPV, ou un local où se trouve cet onduleur OPV (par exemple, pour l'éclairage du local, ou autres). Le côté alternatif 100 de l'onduleur OPV peut être connecté également, par l'intermédiaire d'un ou plusieurs dispositifs interrupteurs ou commutateurs 200, à un ou plusieurs transformateurs 300 élévateurs de la tension, par exemple pour élever la basse tension (par exemple 310 V alternatifs) fournie par le côté alternatif 100 en une haute tension alternative (pouvant être par exemple de 20 kV alternatifs ou 30 kV alternatifs).

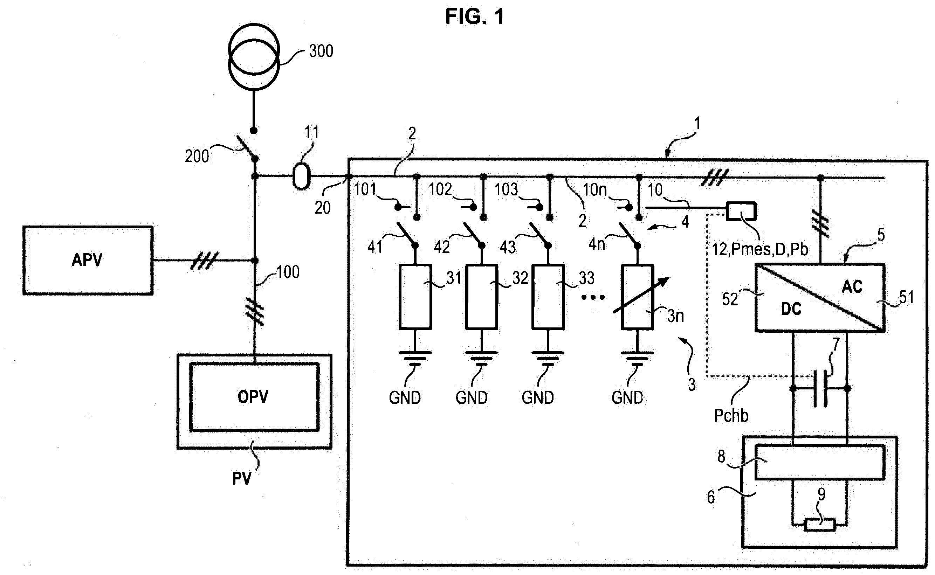

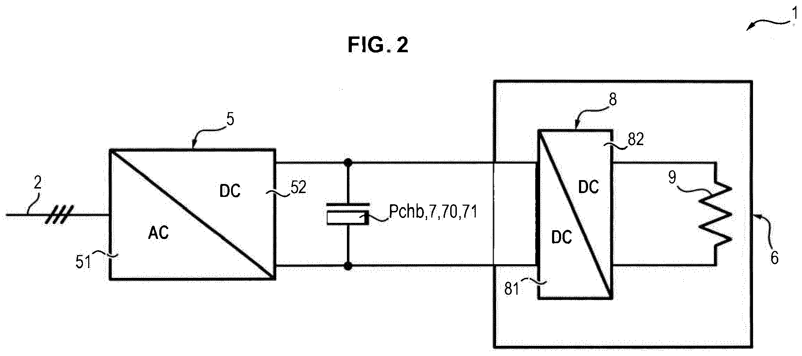

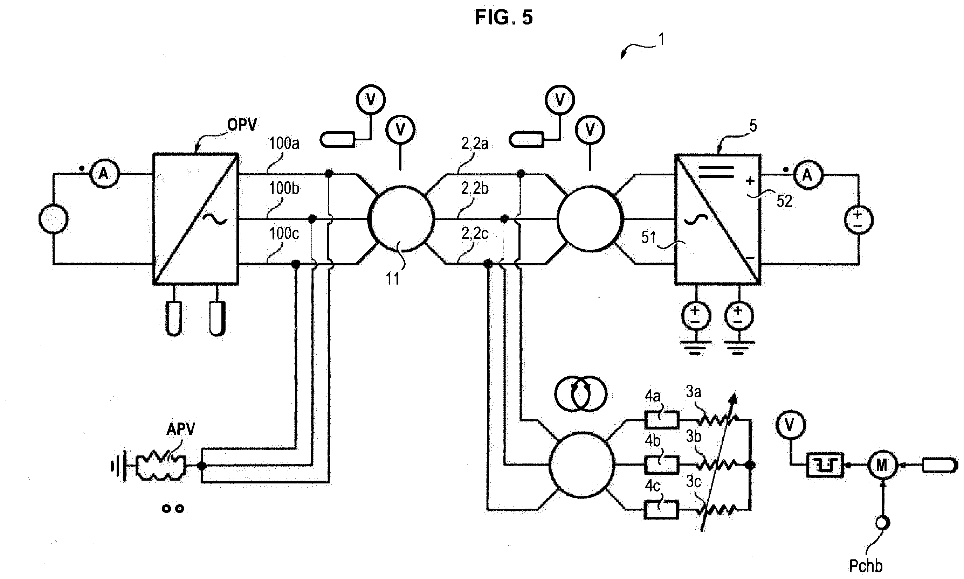

Le côté alternatif 100 est par exemple triphasé. Dans ce cas, le port alternatif 2 est également triphasé, ainsi que cela est représenté sur les figures 1 et 2 par les trois traits en oblique, et ainsi que cela est représenté à la figure 5. Par conséquent, il peut être prévu à la figure 5, comme banc 3 de premières résistances 31, 32, 33, ..., 3n, trois bancs différents 3a, 3b, 3c de résistances pour, respectivement, les trois conducteurs de phase différents 2a, 2b, 2c du port alternatif 2. Les trois bancs 3a, 3b et 3c sont aptes à être connectés par respectivement des moyens de connexion 4a, 4b et 4c aux conducteurs de phase 2a, 2b, 2c. De même, lorsque le côté alternatif 100 est relié au port alternatif 2 dans ce cas, ce côté alternatif 100 comporte trois conducteurs de phases 100a, 100b, 100c connectés respectivement aux conducteurs de phase 2a, 2b, 2c du port alternatif 2.

Le port alternatif 2 peut être triphasé à basse tension alternative ou à haute tension alternative, par exemple pour une centrale photovoltaïque.

Le circuit 1 de simulation comporte en outre au moins un convertisseur réversible AC-DC 5, dont le deuxième côté alternatif 51 est connecté au port 2 alternatif et dont le côté continu 52 est connecté à un sous-circuit 6 de dissipation d'énergie en courant continu. Le sous-circuit 6 de dissipation d'énergie en courant continu est connecté à au moins une batterie électrique 7 apte à être chargée en courant continu et à être déchargée en courant continu. Dans ce qui suit et aux dessins, le terme de courant continu est indiqué par DC, et le terme de courant alternatif est indiquée par AC, ainsi que cela est connu de l'homme du métier.

Le rôle du convertisseur 5 est d'émuler un réseau de courant alternatif permettant à l'onduleur OPV de fonctionner comme s'il était branché sur un réseau de courant alternatif. Ainsi, lorsque le panneau solaire PV est exposé à de la lumière ou au soleil, l'onduleur photovoltaïque OPV génère de la puissance active sur son côté alternatif 100. Le banc 3 de résistances est commandé par l'intermédiaire des moyens 4 de connexion pour adapter sa puissance consommée de manière à ne laisser au convertisseur 5 que la puissance nécessaire à la charge de la batterie 7 en courant continu. Néanmoins, dans le cas où la valeur résistive équivalente du banc 3 de résistances varie par palier et ne peut donc pas adapter d'une manière parfaite la puissance de ce banc 3 à la puissance générée par l'onduleur photovoltaïque OPV, le convertisseur 5 sert aussi dans ce cas à dissiper la puissance qui n'est pas prise en charge par le banc 3 de résistances. L'onduleur 5 est par exemple à transistor(s) du type IGBT.

Suivant un mode de réalisation, la batterie électrique 7 est connectée au côté continu 52 du convertisseur 5.

Suivant un mode de réalisation de l'invention, le sous-circuit 6 de dissipation d'énergie en courant continu comprend un hacheur 8 comportant un premier côté continu 81 de hacheur, connecté au côté continu 52 du convertisseur 5, et un deuxième côté continu 82 de hacheur connecté à au moins une deuxième résistance 9. Ce sous circuit peut également être constitué de charges électroniques variables.

Ainsi, le hacheur 8 associé à la deuxième résistance 9 connectée au côté continu 52 du convertisseur 5 permet de dissiper la puissance lorsque la batterie 7 est complètement chargée ou lorsque la puissance à dissiper excède la puissance de charge de la batterie.

Lors des phases de démarrage, par exemple, lorsque le soleil se lève, le convertisseur 5 émule un réseau alternatif et fournit, grâce à la batterie se déchargeant pour fournir du courant continu au convertisseur 5, la puissance nécessaire au dispositif auxiliaire APV de l'onduleur OPV. La batterie 7 est dimensionnée pour couvrir les besoins en énergie au moins pour ces phases de démarrage.

Suivant un mode de réalisation, les moyens 4 de connexion comportent une entrée 10 de commande permettant de connecter et de déconnecter d'une manière sélective chaque première résistance 31, 32, 33, ..., 3n au port 2 alternatif. Par exemple, les moyens 4 de connexion comportent au moins un interrupteur 41, 42, 43, ..., 4n branché en série avec, respectivement, chaque première résistance 31, 32, 33, ..., 3n. Chaque interrupteur respectif 41, 42, 43, ..., 4n comporte une entrée de commande 101, 102, 103, ..., 10n d'interrupteur permettant de le faire passer d'une manière sélective dans l'une et l'autre d'une première position de fermeture de l'interrupteur 41, 42, 43, ..., 4n et d'une deuxième position d'ouverture de l'interrupteur 41, 42, 43, ..., 4n.

Le convertisseur 5 est un onduleur 5 de dissipation d'énergie reçue du port alternatif 2 sur son côté alternatif 51 et/ou de génération d'énergie sur le port alternatif 2 à partir de son côté alternatif 51, cette énergie étant fournie par décharge de la batterie 7 dans ce deuxième cas. Dans le cas où le convertisseur 5 fonctionne en dissipation d'énergie reçue du port alternatif 2 sur son côté alternatif 51, le convertisseur AC-DC fonctionne en redresseur (transformation du courant alternatif AC du deuxième côté 51 en courant continu DC sur le côté 52). Dans le cas où le convertisseur 5 fonctionne en génération d'énergie sur le port alternatif 2 à partir de son côté alternatif 51, le convertisseur AC-DC fonctionne en onduleur (transformation du courant continu DC sur le côté 52 en courant alternatif AC du deuxième côté 51).

On prévoit que la batterie 7 soit initialement chargée à une charge déterminée.

Le convertisseur 5 permet d'imposer une tension alternative d'amplitude constante et de fréquence constante sur le port alternatif 2, afin d'émuler un réseau alternatif sur ce port alternatif 2 et donc sur le côté alternatif 100 de l'onduleur photovoltaïque OPV, lorsque ce dernier est connecté au port alternatif 2 du circuit 1 de simulation.

Le convertisseur 5 a aussi pour fonction de dissiper l'énergie qui n'est pas consommée par le banc 3 de résistances, du fait par exemple du mode de fonctionnement discret de ce dernier et du retard de commande de ce dernier.

Suivant un mode de réalisation, sur le côté continu 52 du convertisseur 5, la batterie 7 maintient la tension continue à une valeur constante, permettant le bon fonctionnement du convertisseur 5.

Suivant un mode de réalisation, la tension continue fournie par la batterie 7 au côté continu 52 du convertisseur 5 est supérieure au double de la tension simple crête (cette tension simple crête étant égale à la moitié de la tension crête à crête) présente sur le port alternatif 2 et/ou sur le côté alternatif 51 du convertisseur. Cette tension de la batterie 7 possède par exemple suffisamment de marge pour éviter des ratés de commutation.

Suivant un mode de réalisation, le hacheur 8 est agencé pour réguler le niveau de charge de la batterie 7. Le hacheur 8 dissipe par exemple la puissance vue par le convertisseur 5 à laquelle est soustraite une consigne Pchb de puissance de charge de la batterie 7. Cette consigne Pchb de puissance de charge de la batterie est par exemple comprise entre 0 et la puissance de charge maximale prescrite PchMax de la batterie.

Suivant un mode de réalisation, la batterie 7 comporte un dispositif 70 de régulation prévu pour déterminer cette consigne Pchb de puissance de charge de la batterie 7, par exemple en fonction d'un état de charge de la batterie ayant été mesuré par des moyens 71 de mesure que comporte la batterie 7.

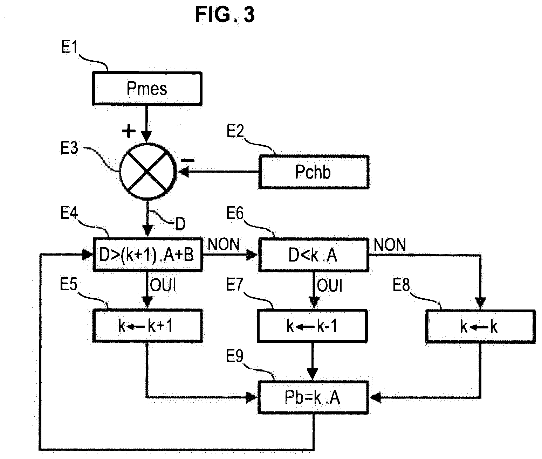

On décrit ci-dessous, en référence à la figure 3, un procédé de commande du circuit 1 de simulation suivant un mode de réalisation de l'invention.

Lors d'une première étape E1, on mesure une première puissance Pmes présente sur le port 2 de courant alternatif. Cette puissance Pmes est par exemple mesurée à partir des valeurs de mesure fournies par au moins un organe 11 de mesure prévu sur le port alternatif 2, par exemple sur l'entrée 20 du port alternatif 2.

Puis, au cours d'une étape E2, on détermine la deuxième puissance Pchb de consigne de charge de la batterie 7.

Au cours d'une étape E3, on calcule un paramètre D de différence égal à la première puissance Pmes, à laquelle est soustraite la deuxième puissance Pchb. On a donc :

$$D = Pmes - Pchb.$$

Ce procédé de commande est par exemple mis en oeuvre par une unité 12 de commande connectée aux entrées de commande 101, 102, 103, ..., 10n des interrupteurs 41, 42, 43, ..., 4n. Cette unité 12 de commande est par conséquent reliée à l'organe 11 de mesure et est apte à déterminer, à partir de la mesure fournie par cet organe 11 de mesure, la puissance Pmes. L'unité 12 de commande est également reliée au dispositif 70 de détermination de la consigne Pchb de puissance charge de la batterie 7, pour recevoir de celui-ci cette consigne Pchb.

Puis, au cours d'une étape de commande, dont on décrira un mode de réalisation ci-dessous, on commande la connexion ou la déconnexion de chacune des premières résistances 31, 32, 33, ..., 3n en fonction du paramètre D de différence.

Dans un mode de réalisation, les premières résistances 31, 32, 33, ..., 3n ont des premières valeurs résistives respectives dont la sélection par les moyens 41, 42, 43, ..., 4n de connexion permet d'obtenir une puissance du banc 3 de premières résistances, qui est multiple entière d'un pas A de puissance positif prescrit, non nul. Par exemple, le banc 3 de résistances a plusieurs gradins de puissance, par exemple 10 kW, 2 x 20 kW, 50 kW, 100 kW, 200 kW, 300 kW, dont la combinaison permet d'obtenir le pas A de réglage suffisamment fin.

Par exemple, on règle par les commandes envoyées par l'unité 12 aux entrées de commande 101, 102, 103, ..., 10n des moyens 41, 42, 43, ..., 4n de connexion la puissance du banc 3 de premières résistances 31, 32, 33, ..., 3n à une valeur égale à k.A, où k est un nombre entier positif.

Pour ce faire, suivant un mode de réalisation, on initialise le nombre entier positif k à une valeur prescrite. Puis, pour effectuer l'étape de commande, on examine, au cours de l'étape E4, si le paramètre D de différence est supérieur à (k + 1).A + B. Dans l'affirmative à l'étape E4, on augmente k d'une unité au cours de l'étape E5. B est une constante positive prescrite inférieure à A.

Dans la négative à l'étape E4, on examine au cours de l'étape E6 si le paramètre D de différence est inférieur à k.A. Dans l'affirmative à l'étape E6, on diminue k d'une unité au cours de l'étape E7. Dans la négative à l'étape E6, on maintient k inchangé au cours de l'étape E8.

Les étapes E5, E7 et E8 sont suivies par l'étape E9.

Au cours de l'étape E9, on commande par les moyens de connexion 4, 41, 42, 43, ..., 4n la connexion ou la déconnexion de chacune des premières résistances 31, 32, 33, ..., 3n pour que la puissance Pb du banc 3 de premières résistances soit égale à Pb = k.A. La variation de puissance délivrée par l'onduleur OPV (en raison par exemple d'une variation du luminosité sur les panneaux photovoltaïques) modifie la puissance mesurée Pmes par l'organe 11 de mesure sur le port alternatif 2 et donc la valeur du paramètre D de différence calculée. Par conséquent, l'étape E9 est suivie par l'étape E4. Bien entendu, l'étape E3 pourrait être suivie, au lieu de l'étape E4, par l'étape E6 ou par une étape consistant à examiner si D est à la fois supérieur à k.A et inférieur à (k + 1).A + B, avec l'étape E9 suivie par cette dernière étape ou l'étape E4 ou l'étape E6.

La puissance dissipée par des dispositifs auxiliaires du banc 3 de résistances est prise en compte par la commande en interne du banc 3 de résistance par l'unité 12 de commande. Pmes est la puissance mesurée aux bornes du convertisseur 5, du banc 3 de premières résistances en retranchant la puissance de tous les auxiliaires du banc 3. k représente la position de réglage du banc 3 de premières résistances. Ainsi, le retard entre une mesure de la puissance Pmes à dissiper et le changement de pas k est pris en compte par le circuit 1. L'unité 12 de commande est prévue pour que le banc 3 de premières résistances ne consomme pas plus d'énergie que la consigne Pb de puissance qu'il reçoit.

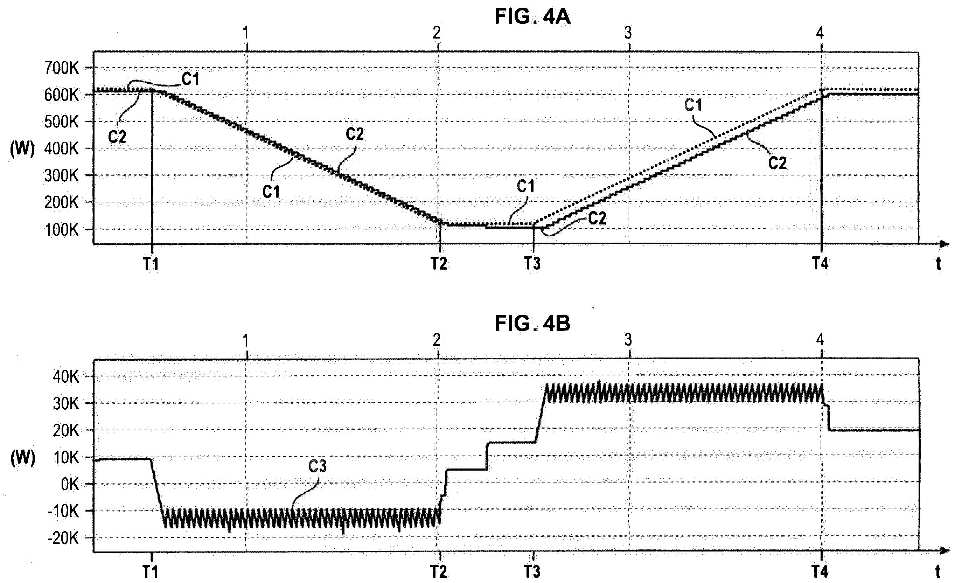

A la figure 4A, la courbe C1 correspond à une variation de puissance imposée au port alternatif 2 sur son entrée 20 de connexion au côté alternatif 100 de l'onduleur photovoltaïque OPV, par exemple par le fait que ce côté alternatif 100 fournit un courant électrique issu de l'onduleur photovoltaïque OPV du fait de la conversion de la lumière reçue par le panneau photovoltaïque ou la centrale photovoltaïque en ce courant électrique.

Par exemple, lorsque l'ensoleillement est constant sur le panneau photovoltaïque PV, la courbe C1 présente une valeur constante avant le temps T1 et après le temps T4. Lorsque la courbe C1 descend du temps T1 au temps T2, cela correspond à une diminution de l'ensoleillement sur le panneau photovoltaïque PV, qui produit alors moins de courant, cela étant par exemple le cas lorsque la nuit approche ou que le ciel se couvre. A l'inverse, la courbe C1 va en augmentant du temps T3 au temps T4, lorsque l'ensoleillement augmente au cours du temps, ce qui fait produire plus de courant à l'onduleur OPV, cela étant le cas par exemple au lever du soleil ou lorsque le ciel se dégage.

La courbe C2 représente la puissance Pb du banc 3 de premières résistances. Sur la figure 4B, la courbe C3 représente la puissance active du convertisseur 5. Les courbes C1, C2, C3 sont données en fonction du temps t gradué de la même manière aux figures 4A et 4B en abscisse (en secondes).

La courbe C2 suit avec un léger temps de retard et suivant des paliers successifs (avec le pas A entre les paliers consécutifs) la courbe C1.

Ainsi, lorsque la puissance Pmes sur l'entrée 20 du port alternatif 2 diminue (courbe C1 décroissante), on actionne les moyens 4 de connexion pour faire augmenter la résistance équivalente du banc 3 de résistances vue par l'entrée 20, ce qui fait diminuer la puissance Pb de commande du banc 3. Pendant ce temps, la puissance active du convertisseur 5 est négative selon la courbe C3 entre les temps T1 et T2, ce qui signifie que le convertisseur 5 fournit de la puissance au port alternatif 2 sur son côté alternatif 51, pour compenser la différence entre Pmes (courbe C1) et Pb (courbe C2). Dans ce cas, entre T1 et T2, la batterie 7 se décharge pour fournir au côté 52 du convertisseur 5 un courant continu, qui est transformé par ce convertisseur 5 en courant alternatif fourni par son côté alternatif 51 au port alternatif 2.

Entre les temps T3 et T4, lorsque la puissance Pmes sur l'entrée 20 augmente selon la courbe C1, la puissance Pb du banc 3 de résistances (courbe C2) suit également par paliers successifs (avec, entre deux paliers consécutifs, le pas A) la puissance Pmes sur l'entrée 20 (courbe C1) avec un temps de retard. Dans ce cas, entre les temps T3 et T4, le convertisseur 5 dissipe de la puissance active en absorbant sur son côté alternatif 51 de la puissance reçue du port alternatif 2 (courbe C3 positive dans ce cas). Dans ce cas, le courant reçu sur le côté alternatif 51 du convertisseur 5 est transformé par celui-ci en courant continu sortant sur son deuxième côté alternatif 52 pour alors charger la batterie 7. Lorsque la batterie 7 est entièrement chargée ou a atteint sa puissance de charge maximale PchMax, le courant électrique fourni par le côté continu 52 du convertisseur 5 est envoyé au hacheur 8 qui le transforme en un autre courant continu passant dans la deuxième résistance 9, pour dissiper une puissance correspondante dans cette résistance 9. Le hacheur 10 provoque la dissipation dans la deuxième résistance 9 de la puissance vue par le convertisseur 5, à laquelle il soustrait la consigne de puissance de charge Pchb de la batterie 7.

Suivant un mode de réalisation, l'invention concerne un circuit (1) de simulation d'un réseau électrique alternatif, le circuit ayant au moins un port (2) de courant alternatif destiné à être connecté au côté alternatif (100) d'un premier onduleur (OPV) d'au moins un panneau photovoltaïque (PV) ou d'une centrale photovoltaïque, devant fournir du courant électrique alternatif par ce côté alternatif, le circuit (1) comportant au moins un banc (3) de premières résistances (31, 32, 33, ..., 3n) aptes à être connectées de manière sélective au port (2) de courant alternatif par l'intermédiaire de moyens (4, 41, 42, 43, ..., 4n) de connexion,
caractérisé en ce que le circuit comporte en outre au moins un deuxième onduleur (5) comportant un deuxième côté alternatif (51) connecté au port (2) de courant alternatif et un côté continu (52) connecté à un sous-circuit (6) de dissipation d'énergie en courant continu connecté à au moins une batterie électrique (7) apte à être chargée en courant continu et à être déchargée en courant continu.

Suivant un mode de réalisation, dans le cas d'au moins une éolienne dans ou constituant l'unité PV de production d'électricité, le circuit 1 peut servir à vérifier que pour une vitesse de vent déterminée, l'unité PV de production d'électricité à éolienne(s) produit une quantité déterminée d'électricité (par exemple puissance). Dans un mode de réalisation, le circuit 1 simule la présence d'un réseau électrique alternatif et simule par exemple une charge variable, dans laquelle la au moins une éolienne PV pourrait débiter du courant électrique à différents régimes de vent. Par exemple, on mesure par l'organe 11 de mesure la puissance Pmes délivrée par la ou les éoliennes PV, pour ensuite déterminer combien et/ou quelles résistances 31, 32, 33, ..., 3n du banc 3 de résistances sont à utiliser. Dans un mode de réalisation, le circuit 1 peut servir de circuit d'essai de la au moins une éolienne PV, avant le raccordement définitif de cette au moins une éolienne PV au réseau électrique d'évacuation d'électricité. Dans un mode de réalisation, le raccordement prévoit le raccordement de la au moins une éolienne PV à un réseau intermédiaire (dénommé en anglais « inter-array »), qui doit être lui-même raccordé au port 2. Ainsi, suivant un mode de réalisation, le circuit 1 peut servir à mener des tests de réception d'éoliennes offshore.

**Revendications**

1. Circuit (1) ayant au moins un port (2) de courant alternatif destiné à être connecté à au moins une unité de production d'électricité (PV), le circuit (1) comportant au moins un banc (3) de premières résistances (31, 32, 33, ..., 3n) aptes à être connectées de manière sélective au port (2) de courant alternatif par l'intermédiaire de moyens (4, 41, 42, 43, ..., 4n) de connexion,
les moyens (4, 41, 42, 43, ..., 4n) de connexion comportant une unité de commande (10, 101, 102, 103, ..., 10n) permettant de connecter et déconnecter d'une manière sélective chaque première résistance (31, 32, 33, ..., 3n) au port (2) de courant alternatif, **caractérisé en ce que** le circuit comporte en outre au moins un convertisseur réversible AC-DC (5) comportant un deuxième côté alternatif (51) connecté au port (2) de courant alternatif et un côté continu (52) connecté à un sous-circuit (6) de dissipation d'énergie en courant continu connecté à au moins une batterie électrique (7) apte à être chargée en courant continu et à être déchargée en courant continu,
le circuit comportant un organe (11) de mesure, qui est prévu sur le port (2) de courant alternatif et qui est apte à fournir des valeurs de mesure, lorsque le port (2) est connecté à la au moins une unité de production d'électricité (PV),

l'unité (12) de commande étant reliée à l'organe (11) de mesure et étant apte à déterminer, à partir des valeurs de mesure, une première puissance (Pmes) présente sur le port (2) de courant alternatif,

le convertisseur (5) est un onduleur (5) de dissipation d'énergie reçue du port de courant alternatif (2) sur son deuxième côté alternatif (51) et/ou de génération d'énergie sur le port de courant alternatif (2) à partir de son deuxième côté alternatif (51),

le convertisseur (5), le sous-circuit (6) de dissipation d'énergie et la batterie électrique (7) compensant une différence entre la première puissance (Pmes) et une deuxième puissance (Pb) du banc (3) de premières résistances (31, 32, 33, ..., 3n).

**2.** Circuit suivant la revendication 1, **caractérisé en ce que** la batterie électrique (7) est connectée au côté continu (52) du convertisseur (5).

**3.** Circuit suivant l'une quelconque des revendications 1 et 2, **caractérisé en ce que** le sous-circuit (6) de dissipation d'énergie en courant continu comprend un hacheur (8) comportant un premier côté continu (81) de hacheur, connecté au côté continu (52) du convertisseur (5), et un deuxième côté continu (82) de hacheur, connecté à au moins une deuxième résistance (9).

**4.** Circuit suivant l'une quelconque des revendications 1 et 2, **caractérisé en ce que** le sous-circuit (6) de dissipation d'énergie en courant continu est constitué d'une charge électronique variable.

**5.** Circuit suivant l'une quelconque des revendications précédentes, **caractérisé en ce que** les moyens (4, 41, 42, 43, ..., 4n) de connexion comportent au moins un interrupteur (41, 42, 43, ..., 4n) branché en série avec chaque première résistance (31, 32, 33, ..., 3n), chaque interrupteur (41, 42, 43, ..., 4n) comportant une commande (101, 102, 103, ..., 10n) d'interrupteur permettant de le faire passer d'une manière sélective dans l'une et l'autre d'une première position de fermeture de l'interrupteur (41, 42, 43, ..., 4n) et d'une deuxième position d'ouverture de l'interrupteur (41, 42, 43, ..., 4n).

**6.** Circuit suivant l'une quelconque des revendications 1 à 5, **caractérisé en ce que** le port (2) de courant alternatif est destiné à être connecté à un autre côté alternatif (100) d'au moins une unité (PV) de production d'électricité.

**7.** Circuit suivant l'une quelconque des revendications 1 à 5, **caractérisé en ce que** le port (2) de courant alternatif est destiné à être connecté au côté alternatif (100) d'un autre onduleur (OPV) d'au moins un panneau photovoltaïque (PV) ou d'une centrale photovoltaïque, devant fournir du courant électrique alternatif par ce côté alternatif (100).

**8.** Circuit suivant l'une quelconque des revendications 1 à 5, **caractérisé en ce que** le port (2) de courant alternatif est destiné à être connecté au moins une éolienne (PV) de production d'électricité.

**9.** Circuit suivant l'une quelconque des revendications 1 à 5, **caractérisé en ce que** le port (2) de courant alternatif est destiné à être connecté au moins une éolienne (PV) offshore de production d'électricité.

**10.** Procédé de commande d'un circuit (1) suivant l'une quelconque des revendications précédentes, **caractérisé en ce que**

on mesure (E1) une première puissance (Pmes) présente sur le port (2) de courant alternatif,

on détermine (E2) une deuxième puissance (Pchb) de consigne de charge de la batterie (7),

on calcule (E3) un paramètre (D) de différence égal à la première puissance (Pmes), à laquelle est soustraite la deuxième puissance (Pchb),

et au cours d'une étape (E4, E5) de commande, on commande la connexion ou la déconnexion de chacune des premières résistances (31, 32, 33, ..., 3n) en fonction du paramètre (D) de différence.

**11.** Procédé suivant la revendication 10, **caractérisé en ce que** les premières résistances ont des premières valeurs résistives respectives dont la sélection par les moyens de connexion permet d'obtenir une puissance du banc de premières résistances, qui est multiple entière d'un pas A de puissance positif prescrit,

on initialise un nombre entier positif k à une valeur prescrite,

et pour effectuer l'étape de commande, on examine :

- si $D > (k+1).A+B$, pour dans l'affirmative augmenter k d'une unité (E5), où D est le paramètre de différence, B est une constante prescrite positive inférieure à A,
- si $D < k.A$, pour, dans l'affirmative, diminuer k d'une unité,
- et sinon, on maintient k,

puis on commande par les moyens de connexion (4, 41, 42, 43, ..., 4n) la connexion ou la déconnexion de chacune des premières résistances (31, 32, 33, ..., 3n) pour que la puissance Pb du banc (3) de premières résistances (31, 32, 33, ..., 3n) soit égale à $Pb= k.A$.

**Patentansprüche**

**1.** Schaltung (1) mit zumindest einem Wechselstromanschluss (2) zum Anschluss an zumindest eine Stromerzeugungseinheit (PV), wobei die Schaltung (1) zumindest eine Bank (3) von ersten Widerständen (31, 32, 33, ..., 3n) aufweist, die geeignet sind, vermittels Anschlussmitteln (4, 41, 42, 43, ..., 4n) wahlweise an den Wechselstromanschluss (2) angeschlossen zu werden,
wobei die Anschlussmittel (4, 41, 42, 43, ..., 4n) eine Steuereinheit (10, 101, 102, 103, ..., 10n) umfassen, mit der jeder erste Widerstand (31, 32, 33, ..., 3n) wahlweise an den Wechselstromanschluss (2) angeschlossen und von ihm getrennt werden kann, **dadurch gekennzeichnet, dass** die Schaltung ferner zumindest einen reversiblen AC-DC-Wandler (5) umfasst, der eine zweite Wechselstromseite (51) aufweist, die mit dem Wechselstromanschluss (2) angeschlossen ist, und eine Gleichstromseite (52), die mit einer Gleichstrom-Energieverlust-Teilschaltung (6) angeschlossen ist, die mit zumindest einer elektrischen Batterie (7) angeschlossen ist, die geeignet ist, mit Gleichstrom geladen und mit Gleichstrom entladen zu werden,
wobei die Schaltung ein Messelement (11) umfasst, das am Wechselstromanschluss (2) vorgesehen ist und geeignet ist, Messwerte zu liefern, wenn der Anschluss (2) mit der zumindest einen Stromerzeugungseinheit (PV) angeschlossen ist,
wobei die Steuereinheit (12) mit dem Messelement (11) verbunden und geeignet ist, aus den gemessenen Werten eine erste Leistung (Pmes) am Wechselstromanschluss (2) zu bestimmen,
wobei der Wandler (5) ein Wechselrichter (5) zur Ableitung der von dem Wechselstromanschluss (2) auf seiner zweiten Wechselspannungsseite (51) empfangenen Energie und/oder zur Erzeugung von Energie am Wechselstromanschluss (2) von seiner zweiten Wechselspannungsseite (51) ist,
wobei der Wandler (5), die Energieverlust-Teilschaltung (6) und die elektrische Batterie (7) eine Differenz zwischen der ersten Leistung (Pmes) und einer zweiten Leistung (Pb) der Bank (3) von ersten Widerstände (31, 32, 33, ..., 3n) ausgleicht.

2. Schaltung nach Anspruch 1, **dadurch gekennzeichnet, dass** die elektrische Batterie (7) mit der Gleichspannungsseite (52) des Wandlers (5) angeschlossen ist.

3. Schaltung nach einem der Ansprüche 1 und 2, **dadurch gekennzeichnet, dass** die Gleichstrom-Energieverlust-Teilschaltung (6) einen Chopper (8) umfasst, der eine erste Chopper-Gleichspannungsseite (81) umfasst, die mit der Gleichspannungsseite (52) des Wandlers (5) angeschlossen ist, und eine zweite Chopper-Gleichspannungsseite (82), die mit zumindest einem zweiten Widerstand (9) angeschlossen ist.

4. Schaltung nach einem der Ansprüche 1 und 2, **da-**

**durch gekennzeichnet, dass** die Gleichspannungsableitungs-Teilschaltung (6) aus einer variablen elektronischen Last besteht.

5. Schaltung nach einem der vorstehenden Ansprüche, **dadurch gekennzeichnet, dass** die Anschlussmittel (4, 41, 42, 43, ..., 4n) zumindest einen Schalter (41, 42, 43, ..., 4n) umfassen, der mit jedem ersten Widerstand (31, 32, 33, ..., 3n) in Reihe geschaltet ist, wobei jeder Schalter (41, 42, 43, ..., 4n) eine Schaltersteuerung (101, 102, 103, ..., 10n) umfasst, die es ermöglicht, ihn wahlweise in eine und eine andere einer ersten Schließstellung des Schalters (41, 42, 43, ..., 4n) und einer zweiten Öffnungsstellung des Schalters (41, 42, 43, ..., 4n) zu bringen.

6. Schaltung nach einem der Ansprüche 1 bis 5, **dadurch gekennzeichnet, dass** der Wechselstromanschluss (2) dazu bestimmt ist, an eine andere Wechselstromseite (100) zumindest einer Stromerzeugungseinheit (PV) angeschlossen zu werden.

7. Schaltung nach einem der Ansprüche 1 bis 5, **dadurch gekennzeichnet, dass** der Wechselstromanschluss (2) dazu bestimmt ist, an eine Wechselstromseite (100) eines anderen Wechselrichters (OPV) zumindest eines Photovoltaikmoduls (PV) oder einer Photovoltaikanlage angeschlossen zu werden, die mit dieser Wechselstromseite (100) Wechselstrom liefern soll.

8. Schaltung nach einem der Ansprüche 1 bis 5, **dadurch gekennzeichnet, dass** der Wechselstromanschluss (2) dazu bestimmt ist, an zumindest eine Windenergieanlage (PV) zur Stromerzeugung angeschlossen zu werden.

9. Schaltung nach einem der Ansprüche 1 bis 5, **dadurch gekennzeichnet, dass** der Wechselstromanschluss (2) dazu bestimmt ist, an zumindest eine Offshore-Windenergieanlage (PV) zur Stromerzeugung angeschlossen zu werden.

10. Verfahren zur Steuerung einer Schaltung (1) nach einem der vorstehenden Ansprüche, **dadurch gekennzeichnet, dass**
eine erste am Wechselstromanschluss (2) anliegende Leistung (Pmes) gemessen wird (E1),
eine zweite Batterielade-Sollwertleistung (Pchb) (7) ermittelt wird (E2),
ein Differenzparameter (D) gleich der ersten Leistung (Pmes) berechnet (E3) wird, von dem die zweite Leistung (Pchb) abgezogen wird,
und in einem Steuerschritt (E4, E5) in Abhängigkeit vom Differenzparameter (D) der Anschluss oder die Trennung jedes der ersten Widerstände (31, 32, 33, ..., 3n) gesteuert wird.

**11.** Verfahren nach Anspruch 10, **dadurch gekennzeichnet, dass** die ersten Widerstände jeweils erste Widerstandswerte aufweisen, deren Auswahl durch die Anschlussmittel es ermöglicht, eine Leistung der Bank von ersten Widerständen zu ermitteln, die ein ganzzahliges Vielfaches einer vorgegebenen positiven Leistungsstufe A ist,
eine positive ganze Zahl k auf einen vorgegebenen Wert initialisiert wird,
und um den Steuerschritt auszuführen, wird untersucht:

    - ob D > (k+1) .A+B, damit wenn ja, k um eine Einheit (E5) erhöht wird, wobei D der Differenzparameter ist, B eine vorgeschriebene positive Konstante kleiner als A ist,
    - ob D < k.A, damit wenn ja, k um eine Einheit verringert wird,
    - und wenn nein, wird k beibehalten,

dann werden durch die Anschlussmittel (4, 41, 42, 43, ..., 4n) der Anschluss oder die Trennung jedes der ersten Widerstände (31, 32, 33, ..., 3n) so gesteuert, dass die Leistung Pb der Bank (3) von ersten Widerstände (31, 32, 33, ..., 3n) gleich Pb = k.A ist.

**Claims**

**1.** A simulation circuit (1) having at least one AC port (2) intended to be coonected to at least one electricity generation unit (PV), the circuit (1) comprising at least one bank (3) of first resistors (31, 32, 33, ..., 3n) capable of being selectively connected to the AC port (2) by means of connection means (4, 41, 42, 43, ..., 4n),
the connection means (4, 41, 42, 43, ..., 4n) comprising a control unit (10, 101, 102, 103, ..., 10n) enabling to selectively connect and disconnect each first resistor (31, 32, 33, ..., 3n) to the AC port (2), **characterized in that** the circuit further comprises at least one reversible AC-DC converter (5) comprising a second AC side (51) connected to the AC port (2) and a DC side (52) connected to a direct current power dissipation sub-circuit (6) connected to at least one electric battery (7) capable of being charged with direct current and of being discharged with direct current,
wherein the circuit comprises a measuring element (11), which is provided on the AC port (2) and which is able to supply measurement values, when the port (2) is connected to the at least one electricity generation unit (PV),
wherein the control unit (12) is connected to the measuring element (11), and is able to determine from the measurement values a first power (Pmes) present on the AC port (2),
wherein the converter (5) is a second inverter (5) for dissipation of power received from the AC port (2) on its second AC side (51) and/or generation of power on the AC port (2) from its second AC side (51), wherein the converter (5), the direct current power dissipation sub-circuit (6) and the electric battery (7) compensate a difference between the first power (Pmes) and a second power (Pb) of the bank (3) of first resistors (31, 32, 33, ..., 3n).

**2.** The circuit according to claim 1, **characterized in that** the electric battery (7) is connected to the DC side (52) of the converter (5).

**3.** The circuit according to any one of claims 1 and 2, **characterized in that** the direct current power dissipation sub-circuit (6) comprises a chopper (8) including a first DC side (81) of chopper, connected to the DC side (52) of the converter (5), and a second DC side (82) of chopper, connected to at least one second resistor (9).

**4.** The circuit according to any one of claims 1 and 2, **characterized in that** the direct current power dissipation sub-circuit (6) consists of a variable electronic load.

**5.** The circuit according to any one of the preceding claims, **characterized in that** the connection means (4, 41, 42, 43, ..., 4n) comprise at least one switch (41, 42, 43, ..., 4n) connected in series to each first resistor (31, 32, 33, ..., 3n), each switch (41, 42, 43, ..., 4n) comprising a switch control (101, 102, 103, ..., 10n) for controlling the switch to pass selectively to one and the other of a first closing position of the switch (41, 42, 43, ..., 4n) and a second opening position of the switch (41, 42, 43, ..., 4n).

**6.** The circuit according to any one of claims 1 to 5, **characterized in that** the AC port (2) is intended to be connected to another AC side (100) of at least one electricity generation unit (PV).

**7.** The circuit according to any one of claims 1 to 6, **characterized in that** the AC port (2) is intended to be connected to the AC side (100) of another inverter (OPV) of at least one photovoltaic panel (PV) or of a photovoltaic plant, having to supply AC electric current via this AC side (100).

**8.** The circuit according to any one of claims 1 to 5, **characterized in that** the AC port (2) is intended to be connected to at least one electricity generation wind turbine (PV).

**9.** The circuit according to any one of claims 1 to 5, **characterized in that** the AC port (2) is intended to be connected to at least one offshore electricity generation wind turbine (PV).

**10.** A method for controlling a simulation circuit (1) according to any one of the preceding claims, **characterized in that**

a first power (Pmes) present on the AC port (2) is measured (E1),

a second setpoint load power (Pchb) of the battery (7) is determined (E2),

a difference parameter (D) equal to the first power (Pmes) from which the second power (Pchb) is subtracted, is calculated (E3),

and during a control step (E4, E5), the connection or disconnection of each of the first resistors (31, 32, 33, ..., 3n) is controlled as a function of the difference parameter (D).

**11.** The method according to claim 10, **characterized in that** the first resistors have respective first resistive values whereof selection by the connection means enables to obtain a power of the bank of first resistors, which is an integer multiple of a pitch A of prescribed positive power,

a positive integer k is initialised at a prescribed value, and to conduct the control step, it is examined:

- if $D > (k+1).A+B$, in the affirmative to increase k by one unit (E5), where D is the difference parameter, B is a prescribed constant positive less than A,
- if $D < k.A$, in the affirmative to decrease k by one unit,
- and if not, k is kept,

then the connection or disconnection of each of the first resistors (31, 32, 33, ..., 3n) is controlled by the connection means (4, 41, 42, 43, ..., 4n) so that the power Pb of the bank (3) of first resistors (31, 32, 33, ..., 3n) is equal to $Pb= k.A$.

**FIG. 1**

FIG. 2

**FIG. 3**

# FIG. 4A

# FIG. 4B

FIG. 5

EP 3 017 480 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 19839636 A
- US 20130063993 A
- CN 202818122 U